(19) Europäisches Patentamt
European Patent Office
Office européen des brevets

(11) **EP 1 826 238 A1**

(12) **EUROPEAN PATENT APPLICATION**
published in accordance with Art. 158(3) EPC

(43) Date of publication:
**29.08.2007 Bulletin 2007/35**

(51) Int Cl.:
***C08L 27/12*** *(2006.01)*

(21) Application number: **05809645.4**

(22) Date of filing: **25.11.2005**

(86) International application number:
**PCT/JP2005/021668**

(87) International publication number:
**WO 2006/057333 (01.06.2006 Gazette 2006/22)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **26.11.2004 JP 2004342771**
**14.09.2005 JP 2005267183**

(71) Applicant: **DAIKIN INDUSTRIES, LTD.**
**Osaka-shi, Osaka 530-8323 (JP)**

(72) Inventors:
• **YANAGIGUCHI, Tomihiko c/o Yodogawa-seisakusho**
**Settsu-shi, Osaka 5668585 (JP)**

• **ICHISAKA, Toshiki c/o Yodogawa-seisakusho Settsu-shi, Osaka 5668585 (JP)**
• **MASUDA, Haruhisa c/o Yodogawa-seisakusho, Settsu-shi, Osaka 5668585 (JP)**
• **OTANI, Mitsuhiro c/o Yodogawa-seisakusho, Settsu-shi, Osaka 5668585 (JP)**

(74) Representative: **HOFFMANN EITLE**
**Patent- und Rechtsanwälte**
**Arabellastrasse 4**
**81925 München (DE)**

(54) **THERMOPLASTIC POLYMER COMPOSITION AND PROCESS FOR PRODUCTION THEREOF**

(57) The object of the present invention is to provide a thermoplastic polymer composition which is flexible and capable of melt-molding and has excellent heat resistance, chemical resistance and oil resistance. Another object of the present invention is to provide a molded article, a laminated article, a hose for industrial use, a tube for industrial use, a fuel hose and a fuel tube comprising the thermoplastic polymer composition. Further object of the present invention is to provide a process for preparing a thermoplastic polymer composition. The thermoplastic polymer composition comprises a fluor-oresin (A) comprising a fluorine-containing ethylenic polymer (a) and a crosslinked fluororubber (B) in which at least a part of at least one kind of fluororubber (b) is crosslinked, and a weight ratio of the fluororesin (A) to the crosslinked fluororubber (B) is 85/15 to 40/60, a fuel permeation coefficient of a molded article obtained from the composition is not more than 40 g· mm/m$^2$· day and a tensile modulus of elasticity of the molded article is not more than 400 MPa.

**EP 1 826 238 A1**

**Description**

TECHNICAL FIELD

The present invention relates to a thermoplastic polymer composition comprising a specific fluororesin and a specific crosslinked fluororubber. The present invention also relates to a molded article, a laminated article, a tube for industrial use, a hose for industrial use, a fuel tube and a fuel hose which comprise the thermoplastic polymer composition. The present invention further relates to a process for preparing a thermoplastic polymer composition.

BACKGROUND ART

Fluororubbers are employed for various uses in the fields of automobiles, semiconductors and other industries, since fluororubbers have excellent properties such as heat resistance, chemical resistance and low compression set.

On the other hand, fluororesins are employed in broad fields such as automobiles, industrial machines, office automation equipment and electrical and electronic equipment since fluororesins are excellent in properties such as sliding properties, heat resistance, chemical resistance, weather resistance and electrical properties.

For the purpose of improving heat resistance of fluororubbers or for the purpose of imparting flexibility to fluororesins, a polymer alloy of a fluororubber and a fluororesin has been studied (for example, see JP-A-61-57641), and draws attention for use in peripheral parts of fuel system as a fuel tube material which is required to have both of low fuel permeability and flexibility.

However, in such a polymer alloy of a fluororubber and a fluororesin, in order to enhance fuel permeability, a content of a fluorine-containing resin component need be increased, but there is a problem that increases in a content of a fluorine-containing resin component results in impairing flexibility. On the other hand, in order to enhance flexibility, a content of a fluororubber component need be increased. However it becomes further difficult to uniformly disperse rubbers in the resin which becomes a continuous phase (sea-component), and as a result, rubbers of a dispersion phase (island-component) forms a co-continuous phase and sufficient physical properties of the resin cannot be obtained.

Therefore, the present situation is such that there is no polymer alloy which comprises a fluororesin and a fluororubber and has both of low fuel permeability and flexibility.

DISCLOSURE OF INVENTION

An object of the present invention is to provide a thermoplastic polymer composition which is flexible, is capable of melt-molding and has excellent heat resistance, chemical resistance, oil resistance, and fuel barrier property. Also, an object of the present invention is to provide a molded article, a laminated article, a tube for industrial use, a hose for industrial use, a fuel tube and a fuel hose which comprise the thermoplastic polymer composition. Further, an object of the present invention is to provide a process for preparing a thermoplastic polymer composition.

Namely, the present invention relates to a thermoplastic polymer composition which comprises a fluororesin (A) comprising a fluorine-containing ethylenic polymer (a) and a crosslinked fluororubber (B) in which at least a part of at least one kind of fluororubber (b) is crosslinked, wherein a weight ratio of the fluororesin (A) to the crosslinked fluororubber (B) is 85/15 to 40/60, a fuel permeation coefficient of a molded article obtained from the composition is not more than 40 g·mm/m$^2$· day and a tensile modulus of elasticity of the molded article is not more than 400 MPa.

It is preferable that the crosslinked fluororubber (B) is one obtained by dynamically crosslinking the fluororubber (b) in the presence of the fluororesin (A) under melting condition of the fluororesin (A).

It is preferable to adjust a 90 % vulcanization completion time T90 of the fluororubber (b) at a dynamically crosslinking temperature to be 2 to 6 minutes.

It is preferable that the fluororubber (b) is at least one kind of rubber selected from the group consisting of a vinylidene fluoride/hexafluoropropylene fluororubber, a vinylidene fluoride/tetrafluoroethylene/hexafluoropropylene fluororubber and a tetrafluoroethylene/propylene fluororubber.

It is preferable that the fluorine-containing ethylenic polymer (a) is:

(a-1) a copolymer of tetrafluoroethylene and ethylene, and/or
(a-2) a copolymer of tetrafluoroethylene and a perfluoro ethylenically unsaturated compound represented by the formula (1):

$$CF_2=CF-R_f^1 \qquad (1)$$

wherein $R_f^1$ represents $-CF_3$ or $-OR_f^2$ and $R_f^2$ represents a perfluoroalkyl group having 1 to 5 carbon atoms.

It is preferable that the composition comprises a polyhydroxy compound as a crosslinking agent (C).

The thermoplastic polymer composition preferably has a structure in which the fluororesin (A) forms a continuous phase and the crosslinked fluororubber (B) forms a dispersion phase.

The crosslinked fluororubber (B) preferably has an average particle size of the dispersed rubbers of 0.01 to 30 μm.

The present invention also relates to a process for preparing a thermoplastic polymer composition which comprises a step for dynamically crosslinking at least one kind of the fluororubber (b) in the presence of the fluororubber (A) comprising the fluorine-containing ethylenic polymer (a) under melting condition of the fluororesin (A) to obtain the crosslinked fluororubber (B), in which at least a part of the fluororubber (b) is crosslinked, and the process is characterized by comprising a step for adjusting a 90 % vulcanization completion time T90 of the fluororubber (b) at a dynamically crosslinking temperature to be 2 to 6 minutes.

It is preferable that the above described adjusting step further includes a step for adding the crosslinking agent (C) and a crosslinking accelerator (D) to the fluororubber (b), and the amounts of crosslinking agent (C) and crosslinking accelerator (D) to be added to the fluororubber (b) are adjusted as follows.

(Adjusting method)

Assuming that the amounts of crosslinking agent (C) and crosslinking accelerator (D) when the 90 % vulcanization completion time T90 at 170°C is 2 to 6 minutes are represented by X part by weight and Y part by weight, respectively,

(i) the amount of crosslinking agent (C) is adjusted to be X part by weight and the amount of crosslinking accelerator (D) is adjusted to be 0.2Y to 0.5Y part by weight, or
(ii) the amount of crosslinking agent (C) is adjusted to be 2X to 5X part by weight and the amount of crosslinking accelerator (D) is adjusted to be 0.4Y to 2.5Y part by weight.

The present invention also relates to a thermoplastic polymer composition obtained by the above described preparation process of the thermoplastic polymer composition.

The present invention further relates to a molded article comprising the thermoplastic polymer composition, a laminated article having a layer comprising the thermoplastic polymer composition, a laminated article having a layer comprising the thermoplastic polymer composition and a layer comprising other thermoplastic polymer, a laminated article having a layer comprising the thermoplastic polymer composition and a layer comprising a crosslinked rubber, and a tube for industrial use, a hose for industrial use, a fuel tube and a fuel hose which comprise the above described laminated articles.

BEST MODE FOR CARRYING OUT THE INVENTION

The present invention relates to the thermoplastic polymer composition which comprises the fluororesin (A) comprising the fluorine-containing ethylenic polymer (a) and the crosslinked fluororubber (B) in which at least a part of at least one kind of fluororubber (b) is crosslinked, wherein a weight ratio of the fluororesin (A) to the crosslinked fluororubber (B) is 85/15 to 40/60, a fuel permeation coefficient of a molded article obtained from the composition is not more than 40 g·mm/m$^2$. day and a tensile modulus of elasticity of the molded article is not more than 400 MPa.

The fluororesin (A) is not particularly limited, and may be a fluororesin comprising at least one kind of fluorine-containing ethylenic polymer (a). It is preferable that the fluorine-containing ethylenic polymer (a) has a structural unit derived from at least one kind of fluorine-containing ethylenic monomer. Examples of the fluorine-containing ethylenic monomer are, for instance, perfluoroolefins such as tetrafluoroethylene and a perfluoro ethylenically unsaturated compound represented by the formula (1):

$$CF_2=CF\text{-}R_f{}^1 \qquad (1)$$

wherein $R_f{}^1$ is $-CF_3$ or $-OR_f{}^2$, and $R_f{}^2$ is a perfluoroalkyl group having 1 to 5 carbon atoms; and fluoroolefins such as chlorotrifluoroethylene, trifluoroethylene, hexafluoroisobutene, vinylidene fluoride, vinyl fluoride, a compound represented by the formula (2):

$$CH_2=CX^1(CF_2)_nX^2 \qquad (2)$$

wherein $X^1$ is a hydrogen atom or a fluorine atom, $X^2$ is a hydrogen atom, a fluorine atom or a chlorine atom, and n is an integer of 1 to 10.

The fluorine-containing ethylenic polymer (a) may have a structural unit derived from a monomer copolymerizable with the above described fluorine-containing ethylenic monomers, and examples of such a monomer are non-fluorine-containing ethylenic monomers other than the above-mentioned fluoroolefins and perfluoroolefins. Examples of a non-fluorine-containing ethylenic monomer are ethylene, propylene, alkyl vinyl ethers and the like. Herein, an alkyl vinyl ether refers to one having an alkyl group having 1 to 5 carbon atoms.

Of those, from the viewpoint that the obtained thermoplastic polymer composition is excellent in heat resistance, chemical resistance and oil resistance, and its molding becomes easy, the fluorine-containing ethylenic polymer (a) is preferably any one selected from:

(a-1) an ethylene-tetrafluoroethylene copolymer (ETFE) comprising tetrafluoroethylene and ethylene,
(a-2) a tetrafluoroethylene-perfluoro(alkyl vinyl ether) copolymer (PFA) comprising tetrafluoroethylene and a perfluoro ethylenically unsaturated compound represented by the formula (1):

$$CF_2=CF-R_f{}^1 \qquad (1)$$

wherein $R_f{}^1$ represents $-CF_3$ or $-OR_f{}^2$ and $R_f{}^2$ represents a perfluoroalkyl group having 1 to 5 carbon atoms or a tetrafluoroethylene-hexafluoropropylene copolymer (FEP),
(a-3) an ethylene-tetrafluoroethylene-hexafluoropropylene copolymer (Et-TFE-HFP copolymer) comprising tetrafluoroethylene, ethylene and a perfluoro ethylenically unsaturated compound represented by the formula (1):

$$CF_2=CF-R_f{}^1 \qquad (1)$$

wherein $R_f{}^1$ represents $-CF_3$ or $-OR_f{}^2$ and $R_f{}^2$ represents a perfluoroalkyl group having 1 to 5 carbon atoms, or an ethylene-tetrafluoroethylene-perfluoro(alkyl vinyl ether) copolymer, and
(a-4) polyvinylidene fluoride (PVDF), and fluorine-containing ethylenic polymers of (a-1) and (a-2) are preferable.

Then preferable fluorine-containing ethylenic polymers of (a-1) and (a-2) are explained in the following.

(a-1) ETFE

ETFE is preferable from the viewpoint that mechanical properties and low fuel permeability are exhibited in addition to the above described effects. A molar ratio of a tetrafluoroethylene unit and an ethylene unit is preferably 20: 80 to 90: 10, more preferably 62:38 to 90: 10, particularly preferably 63:37 to 80:20. Also, the third component may be contained and kind of the third component is not particularly limited as long as it is copolymerizable with tetrafluoroethylene and ethylene. As the third components, monomers represented by the following formulas:

$$CH_2=CX^3R_f{}^3, \quad CF_2=CFR_f{}^3, \quad CF_2=CFOR_f{}^3 \text{ and } CH_2=C(R_f{}^3)_2$$

wherein $X^3$ is a hydrogen atom or a fluorine atom, and $R_f{}^3$ is a fluoroalkyl group which may contain ether linkage-formable oxygen atom, can be used, and of those, fluorine-containing vinyl monomers represented by $CH_2=CX^3R_f{}^3$ are more preferable and monomers in which $R_f{}^3$ has 1 to 8 carbon atoms are particularly preferable.

Specific examples of the fluorine-containing vinyl monomer represented by the above formula are 1,1-dihydroperfluoropropene-1; 1,1-dihydroperfluorobutene-1; 1,1,5-trihydroperfluoropentene-1; 1,1,7-trihydroperfluoroheptene-1; 1,1,2-trihydroperfluorohexene-1; 1,1,2-trihydroperfluorooctene-1; 2,2,3,3,4,4,5,5-octafluoropentyl vinyl ether; perfluoro(methyl vinyl ether); perfluoro(propyl vinyl ether); hexafluoropropene, perfluoro-butene-1; 3,3,3-trifluoro-2-(trifluoromethyl)propene-1; 2,3,3,4,4,5,5-heptafluoro-1-pentene ($CH_2=CFCF_2CF_2CF_2H$); and the like.

A content of the third component is preferably 0.1 to 10 % by mole based on the fluorine-containing ethylenic polymer (a), more preferably 0.1 to 5 % by mole, particularly preferably 0.2 to 4 % by mole.

(a-2) PFA or FEP

PFA or FEP is preferable since heat resistance is particularly excellent in the above described effects, and also low fuel permeability is revealed in addition to the above described effects. More preferable is the fluorine-containing ethylenic polymer (a) comprising 90 to 99 % by mole of a tetrafluoroethylene unit and 1 to 10 % by mole of the perfluoro ethylenically unsaturated compound unit represented by the formula (1). Also, the fluorine-containing ethylenic polymer (a) comprising tetrafluoroethylene and the perfluoro ethylenically unsaturated compound represented by the formula (1) may contain the third component, and kind of the third component is not limited as long as the third component is copolymerizable with tetrafluoroethylene and the perfluoro ethylenically unsaturated compound represented by the formula (1).

A melting point of the fluorine-containing ethylenic polymer (a) is preferably 150° to 310°C, more preferably 150° to 290°C, further preferably 170° to 250°C. When the melting point of the fluorine-containing ethylenic polymer (a) is less than 150°C, heat resistance of the obtained thermoplastic polymer composition tends to decrease, and when it is more than 310°C, in the case of cross-linking the rubber (b) dynamically in the presence of the fluororesin (A) under melting condition of the fluororesin (A), it is necessary to preset a melting temperature to not less than the melting point of the fluorine-containing ethylenic polymer (a), and in that case, the fluororubber (b) tends to deteriorate with heat.

The crosslinked fluororubber (B) used in the present invention is not particularly limited as long as at least a part of at least one kind of fluororubber (b) is cross-linked.

Examples of the fluororubber (b) are a perfluoro fluororubber (b1) and a non-perfluoro fluororubber (b2).

Examples of the perfluoro fluororubber (b1) are a tetrafluoroethylene (hereinafter referred to as TFE) / perfluoro (alkyl vinyl ether) (hereinafter referred to as PAVE) copolymer, a TFE/hexafluoropropylene (hereinafter referred to as HFP)/PAVE copolymer and the like.

Examples of the non-perfluoro fluororubber (b2) are, for instance, a vinylidene fluoride (hereinafter referred to as VdF) polymer, a TFE/propylene copolymer and the like, and these can be used alone or in an optional combination thereof to an extent not to impair the effects of the present invention.

The perfluoro fluororubbers and the non-perfluoro fluororubbers exemplified above are shown by compositions of the main monomers, and a rubber in which a monomer for crosslinking and a modified monomer are copolymerized can also be suitably employed. As for a monomer for crosslinking and a modified monomer, known monomers for crosslinking such as monomers containing an iodine atom, a bromine atom and a double bond, a chain transfer agent, and modified monomers such as known ethylenically unsaturated compounds can be used.

Specific examples of the above described VdF polymers are a VdF/HFP copolymer, a VdF/TFE/HFP copolymer, a VdF/TFE/propylene copolymer, a VdF/ethylene/HFP copolymer, a VdF/TFE/PAVE copolymer, a VdF/PAVE copolymer, a VdF/ chlorotrifluoroethylene (hereinafter referred to as CTFE) copolymer and the like. More specifically, preferable is a fluorine-containing copolymer comprising 25 to 85 % by mole of VdF and 75 to 15 % by mole of at least one kind of other monomer copolymerizable with VdF, and more preferable is a fluorine-containing copolymer comprising 50 to 80 % by mole of VdF and 50 to 20 % by mole of at least one kind of other monomer copolymerizable with VdF.

Herein, examples of at least one kind of other monomer copolymerizable with VdF are, for instance, fluorine-containing monomers such as TFE, CTFE, trifluoroethylene, HFP, trifluoropropylene, tetrafluoropropylene, pentafluoropropylene, trifluorobutene, tetrafluoroisobutene, PAVE and vinyl fluoride, and non-fluorine-containing monomers such as ethylene, propylene and alkyl vinyl ether. These can be used alone or in an optional combination thereof.

Of those fluororubbers, a fluororubber comprising a VdF unit is preferable from the viewpoint of heat resistance, compression set, processability and cost, and a fluororubber having a VdF unit and a HFP unit is more preferable.

From the viewpoint of excellent compression set, at least one kind of rubber selected from the group consisting of a VdF/HFP fluororubber, a VdF/TFE/HFP fluororubber and a TFE/propylene fluororubber is preferable, and a VdF/TFE/HFP fluororubber is more preferable.

The fluororubber (b) employed in the present invention can be prepared by a general emulsion-polymerization process. Polymerization conditions such as a temperature and time at polymerizing may be optionally determined depending on kind of a monomer and a desired elastomer.

The thermoplastic polymer composition of the present invention is obtained by dynamically crosslinking the rubber (b) in the presence of the fluororesin (A) under melting condition of the fluororesin (A). Herein, dynamically cross-linking means cross-linking the rubber (b) dynamically by using a banbury mixer, a pressurizing kneader, an extruder or the like at the same time as melt-kneading. Of these, an extruder such as a twin screw extruder is preferable from the viewpoint that high shear strength can be applied. By treating with cross-linking dynamically, the phase structure of the fluororesin (A) and the crosslinked fluororubber (B) and dispersion of the crosslinked rubber (B) can be controlled.

The crosslinking agent (C) used in the present invention can be selected optionally depending on kind of the fluororubber (b) to be crosslinked and melt-kneading conditions.

A crosslinking system that is used for the present invention can be optionally selected depending on kind of a crosslinkable group (cure site) or uses of the obtained molded article, when the fluororubber (b) has a crosslinkable group (cure site). Any of polyol crosslinking system, organoperoxide crosslinking system and polyamine crosslinking system can be adopted as the crosslinking system.

Herein, crosslinking by the polyol crosslinking system is suitable because of features that a carbon-oxygen bond is contained at a crosslinking point, compression set is small, and moldability and sealing properties are excellent.

When crosslinking by the organoperoxide crosslinking system, since a carbon-carbon bond is contained at a crosslinking point, there are features that chemical resistance and steam resistance are excellent as compared with the polyol crosslinking system having a carbon-oxygen bond at a crosslinking point and the polyamine crosslinking system having a carbon-nitrogen double bond at a crosslinking point.

When crosslinking by the polyamine crosslinking system, a carbon-nitrogen double bond is contained at a crosslinking point, and there is a feature that dynamic mechanical properties are excellent. However, compression set tends to become large as compared with the cases of crosslinking by using a crosslinking agent of polyol crosslinking system or organoperoxide crosslinking system.

Therefore, in the present invention, it is preferable to use a crosslinking agent for polyol crosslinking system or organoperoxide crosslinking system, and it is more preferable to use a crosslinking agent for polyol crosslinking system from the viewpoint of excellent sealing properties as descried above.

A crosslinking agent for polyamine, polyol or organoperoxide crosslinking system can be used for the present invention.

Examples of the polyamine crosslinking agent are, for instance, polyamine compounds such as hexamethylenediamine carbamate, N,N'-dicinnamylidene-1,6-hexamethylenediamine and 4,4'-bis(aminocyclohexyl)methane carbamate. Of those, N,N'-dicinnamylidene-1,6-hexamethylenediamine is preferable.

Compounds known as a crosslinking agent for fluororubbers can be used as a polyol crosslinking agent, and, for example, polyhydroxy compounds, specifically, polyhydroxy aromatic compounds are suitably used from the viewpoint of excellent heat resistance.

The above mentioned polyhydroxy aromatic compound is not particularly limited, and examples thereof are, for instance, 2,2-bis(4-hydroxyphenyl)propane (hereinafter referred to as bisphenol A), 2,2-bis(4-hydroxyphenyl)perfluoropropane (hereinafter referred to as bisphenol AF), resorcin, 1,3-dihydroxybenzene, 1,7-dihydroxynaphthalene, 2,7-dihydroxynaphthalene, 1,6-dihydroxynaphthalene, 4,4'-dihydroxydiphenyl, 4,4'-dihydroxystilbene, 2,6-dihydroxyanthracene, hydroquinone, catechol, 2,2-bis(4-hydroxyphenyl)butane (hereinafter referred to as bisphenol B), 4,4-bis(4-hydroxyphenyl)valeric acid, 2,2-bis(4-hydroxyphenyl)tetrafluorodichloropropane, 4,4'-dihydroxydiphenylsulfone, 4,4'-dihydroxydiphenylketone, tri(4-hydroxyphenyl)methane, 3,3',5,5'-tetrachlorobisphenol A, 3,3',5,5'-tetrabromobisphenol A and the like. These polyhydroxy aromatic compounds may be alkali metal salts, alkali earth metal salts etc., but when a copolymer is coagulated by using an acid, it is preferable not to use the above mentioned metal salts.

A crosslinking agent for an organoperoxide crosslinking system may be an organoperoxide which can generate peroxy radicals easily in the presence of heat or oxidation-reduction system, and specifically, examples are, for instance, 1,1-bis(t-butylperoxy)-3,5,5-trimethylcyclohexane, 2,5-dimethylhexane-2,5-dihydroperoxide, di-t-butylperoxide, t-butylcumylperoxide, dicumylperoxide, $\alpha,\alpha$-bis(t-butylperoxy)-p-diisopropylbenzene, 2,5-dimethyl-2,5-di(t-butylperoxy)hexane, 2,5-dimethyl-2,5-di(t-butylperoxy)-hexyne-3, benzoylperoxide, t-butylperoxybenzene, t-butylperoxy maleic acid, t-butylperoxyisopropyl carbonate and the like. Of those, 2,5-dimethyl-2,5-di(t-butylperoxy)hexane is preferable.

Among those, polyhydroxy compounds are preferable from the viewpoint that compression set of the obtained article etc. is small, and moldability and sealing properties are excellent, and polyhydroxy aromatic compounds are more preferable from the viewpoint that heat resistance is excellent, and bisphenol AF is further preferable.

In the polyol crosslinking system, a crosslinking accelerator (D) is generally used along with a polyol crosslinking agent. When using the crosslinking accelerator (D), a crosslinking reaction can be accelerated by accelerating formation of a double bond in a molecule in a reaction of removing hydrofluoric acid at a trunk chain of a fluororubber.

As for the crosslinking accelerator (D) in the polyol crosslinking system, onium compounds are generally employed. Onium compounds are not particularly limited, and examples thereof are, for instance, ammonium compounds such as quaternary ammonium salts, phosphonium compounds such as quaternary phosphonium salts, oxonium compounds, sulfonium compounds, cyclic amine and monofunctional amine compounds. Of those, quaternary ammonium salts and quaternary phosphonium salts are preferable.

Quaternary ammonium salts are not particularly limited, and examples thereof are, for instance, 8-methyl-1,8-diazabicyclo[5.4.0]-7-undecenium chloride, 8-methyl-1,8-diazabicyclo[5.4.0]-7-undecenium iodide, 8-methyl-1,8-diazabicyclo[5.4.0]-7-undecenium hydroxide, 8-methyl-1,8-diazabicyclo[5.4.0]-7-undecenium methyl sulfate, 8-ethyl-1,8-diazabicyclo[5.4.0]-7-undecenium bromide, 8-propyl-1,8-diazabicyclo[5.4.0]-7-undecenium bromide, 8-dodecyl- 1,8-diazabicyclo[5.4.0]-7-undecenium chloride, 8-dodecyl-1,8-diazabicyclo[5.4.0]-7-undecenium hydroxide, 8-eicosyl-1,8-diazabicyclo[5.4.0]-7-undecenium chloride, 8-tetracosyl-1,8-diazabicyclo[5.4.0]-7-undecenium chloride, 8-benzyl-1,8-diazabicyclo[5.4.0]-7-undecenium chloride (hereinafter referred to as DBU-B), 8-benzyl-1,8-diazabicyclo[5.4.0]-7-undecenium hydroxide, 8-phenethyl- 1,8-diazabicyclo[5.4.0]-7-undecenium chloride, 8-(3-phenylpropyl)-1,8-diazabicyclo[5.4.0]-7-undecenium chloride and the like. Of those, DBU-B is preferable from the viewpoint of crosslinkability and physical properties of a cross-linked article.

Quaternary phosphonium salts are not particularly limited, and examples thereof are, for instance, tetrabutylphosphonium chloride, benzyltriphenylphosphonium chloride (hereinafter referred to as BTPPC), benzyltrimethylphosphonium chloride, benzyltributylphosphonium chloride, tributylallylphosphonium chloride, tributyl-2-methoxypropylphosphonium chloride, benzylphenyl(dimethylamino)phosphonium chloride and the like. Of those, benzyltriphenylphosphonium chloride (BTPPC) is preferable from the viewpoint of crosslinkability and physical properties of a crosslinked article.

In addition, a solid solution of quaternary ammonium salts or quaternary phosphonium salts and bisphenol AF, and a chlorine-free crosslinking accelerator disclosed in JP-A-11-147891 can be employed as a crosslinking accelerator (D).

Examples of a crosslinking accelerator (D) for an organoperoxide crosslinking system are, for instance, triallylcyanurate, triallylisocyanurate(TAIC), triacrylformal, triallyl trimellitate, N,N'-m-phenylenebismaleimide, dipropargyl terephthalate, diallyl phthalate, tetraallyl terephthalate amide, triallyl phosphate, bismaleimide, fluorinated triallyl isocyanurate (1,3,5-tris(2,3,3-trifluoro-2-propenyl)-1,3,5-triazine-2,4,6-trione), tris(diallylamine)-S-triazine, triallyl phosphite, N,N-diallylacrylamide, 1,6-divinyldodecafluorohexane, hexaallylphosphoramide, N,N,N',N'-tetraallylphthalamide, N,N,N',N'-tetraallylmaronamide, trivinylisocyanurate, 2,4,6-trivinylmethyltrisiloxane, tri(5-norbornene-2-methylene)cyanurate, triallylphosphite and the like. Among those, triallylisocyanurate (TAIC) is preferable from the viewpoint of crosslinkability and physical properties of a crosslinked article.

Amounts of the crosslinking agent (C) and crosslinking accelerator (D) are preferably amounts so adjusted that a 90 % vulcanization completion time T90 at a dynamically crosslinking temperature becomes 2 to 6 minutes, more preferably amounts so adjusted that a 90 % vulcanization completion time T90 becomes 3 to 5 minutes. When the amounts are those wherein an optimum vulcanization completion time T90 is less than 2 minutes, there is a tendency that the dispersion of crosslinked rubbers becomes non-uniform and rough, and when more than 6 minutes, there is a tendency that it takes a long time for the rubber to be crosslinked and the rubber is not crosslinked completely.

Herein a 90 % vulcanization completion time T90 means a time necessary to reach 90 % of the maximum torque which is obtained from a vulcanization curve obtained at a dynamically crosslinking temperature with JSR Curastometer model II and V at primary press vulcanization of the fluororubber (b).

With respect to a specific method of determining adding amounts of the crosslinking agent (C) and the crosslinking accelerator (D), firstly X part by weight of the crosslinking agent (C) and Y part by weight of the crosslinking accelerator (D) based on 100 parts by weight of the fluororubber which give a 90 % vulcanization completion time T90 of 2 to 6 minutes, preferably 3 to 5 minutes at 170°C are obtained.

Next, according to these amounts X and Y, preferable adding amounts of the crosslinking agent (C) and the crosslinking accelerator (D) in the present invention are:

(i) the amount of the crosslinking agent (C): X part by weight, and the amount of the crosslinking accelerator (D): 0.2Y to 0.5Y part by weight, preferably 0.3Y to 0.4Y part by weight, or
(ii) the amount of the crosslinking agent (C): 2X to 5X part by weight, and the amount of the crosslinking accelerator (D): 0.4Y to 2.5Y part by weight.

When the amount of the crosslinking agent (D) is less than 0.2Y part by weight, crosslinking of the fluororubber (b) is not sufficiently facilitated, and heat resistance and oil resistance of the obtained thermoplastic polymer composition tend to decrease, and when more than 2.5Y parts by weight, a mechanical strength of the obtained thermoplastic polymer composition tends to decrease.

Under melting condition means under a temperature where the fluororesin (A) and the fluororubber (b) are melted. The melting temperature varies depending on glass transition temperatures and/or melting points of the respective fluororesin (A) and fluororubber (b), and is preferably 120° to 330°C, more preferably 130° to 320°C. When the temperature is less than 120°C, dispersion between the fluororesin (A) and the fluororubber (b) tends to be rough, and when more than 330°C, the rubber (b) tends to deteriorate with heat.

The obtained thermoplastic polymer composition can have a structure in which the fluororesin (A) forms a continuous phase and the crosslinked rubber (B) forms a dispersion phase, or a structure in which the fluororesin (A) and the crosslinked rubber (B) form a co-continuous phase. Of these, it is preferable for the composition to have a structure in which the fluororesin (A) forms a continuous phase and the crosslinked rubber (B) forms a dispersion phase.

Even when the fluororubber (b) forms a matrix at an initial stage of dispersion, a melt-viscosity is increased because the fluororubber (b) becomes the crosslinked rubber (B) with progress of the crosslinking reaction, and as a result, the crosslinked rubber (B) becomes a dispersion phase, or forms a co-continuous phase together with the fluororesin (A).

When such a structure is formed, the thermoplastic polymer composition of the present invention exhibits excellent heat resistance, chemical resistance and oil resistance and has low fuel permeability and excellent moldability. In that case, an average particle size of the dispersed rubbers of the crosslinked fluororubber (B) is preferably 0.01 to 30 $\mu$m. When the average particle size is less than 0.01 $\mu$m, flowability tends to lower, and when more than 30 $\mu$m, strength of the obtained thermoplastic polymer composition tends to decrease.

The preferred embodiment of the thermoplastic polymer composition of the present invention is the structure in which the fluororesin (A) forms a continuous phase and the crosslinked rubber (B) forms a dispersion phase. Also, a co-continuous phase of the fluororesin (A) with the crosslinked rubber (B) may be contained in the structure partly.

An average particle size of the dispersed rubbers of the crosslinked fluororubber (B) in the thermoplastic polymer composition of the present invention is confirmed by any of AFM, SEM or TEM, or by a combination thereof. For example, in the case of using AFM, the difference obtained from the surface information of the fluororesin (A) of a continuous phase and the crosslinked fluororubber (B) of a dispersion phase is obtained as an image of contrast, and it is possible to binarize tone-categorizing of the tone. Images having clear contrast can be obtained by regarding a center position of tone-categorizing as the binarizing position. The particle size of the crosslinked rubber in the dispersion phase can be measured. In the case of using SEM, a particle size of the crosslinked rubbers in the dispersion phase can be measured by processing images with emphasizing contrast, controlling tone, or a combination thereof in such a way that the crosslinked fluororubber (B) in the dispersion phase becomes clear against the images obtained by reflection electron image like the case of AFM. In the case of TEM, a particle size of the crosslinked rubbers in the dispersion phase can be measured by processing images with emphasizing contrast, controlling tone, or a combination thereof like the cases of AFM and SEM. More suitable method can be selected from these methods depending on the respective thermoplastic polymer compositions.

A weight ratio of the fluororesin (A) to the crosslinked fluororubber (B) is 85/15 to 40/60, preferably 80/20 to 50/50, more preferably 80/20 to 60/40. When the content of the fluororesin (A) is less than 40 % by weight, there is a tendency that flowability of the obtained thermoplastic polymer composition tends to deteriorate and moldability is lowered, and when more than 85 % by weight, balance of flexibility and fuel permeability of the obtained thermoplastic polymer composition tends to deteriorate.

A fuel permeation coefficient of the molded article obtained from the thermoplastic composition of the present invention is not more than 40 g·mm/m$^2$· day, preferably not more than 20 g·mm/m$^2$· day, more preferably not more than 10 g·mm/m$^2$·day. A lower limit of the fuel permeation coefficient is not limited particularly, and the lower the lower limit is, the more preferable. When the fuel permeation coefficient exceeds 40 g· mm/m$^2$· day, since anti-fuel permeation property is low, a thickness of the molded article need be increased to inhibit an amount of fuel permeation, which is not preferable from economical point of view. The lower the fuel permeation coefficient is, the more an ability of preventing fuel permeation is enhanced. On the contrary, when the fuel permeation coefficient is large, fuel permeation occurs easily, and therefore the molded article is not suitable for a fuel tube, etc.

The fuel permeation coefficient is measured with the Cup method used in the water-vapor permeation test for moisture-proof packaging material. Herein the Cup method is a method of water-vapor permeation test stipulated in JIS Z 0208, which is a method of measuring an amount of steam passing through a film-like substance having a unit area during a given period of time. In the present invention, a fuel permeation coefficient is measured according to the Cup method. In this specific method, 18 mL of CE 10 (toluene/isooctane/ethanol=45/45/10 vol %) as an imitation fuel is poured into a 20 mL SUS vessel (open part area: $1.26 \times 10^{-3} m^2$), a sheet-like test piece is set on the open part of the vessel and the vessel is sealed to make a test article. The test article is put in a constant temperature equipment (60°C), and a weight of the test article is measured. When decrease of the weight per unit time becomes constant, a fuel permeability is obtained by the following equation.

$$\text{Fuel permeation coefficient (g} \cdot \text{mm/m}^2 \cdot \text{day)} = \frac{(\text{Decreased weight (g)}) \times (\text{Thickness of sheet (mm)})}{(\text{Open part area } 1.26 \times 10^{-3}(m^2)) \times (\text{Measuring interval (day)})}$$

A tensile modulus of elasticity of the molded article obtained from the thermoplastic composition of the present invention is not more than 400 MPa, preferably not more than 350 MPa, more preferably not more than 300 MPa, further preferably not more than 250 MPa. A lower limit of the tensile modulus of elasticity is not limited particularly, and is preferably not less than 5 MPa, more preferably not less than 10 MPa. When the tensile modulus of elasticity exceeds 400 MPa, there is a tendency that the molded article is not suitable as a molded article requiring flexibility.

Also, to the thermoplastic polymer composition of the present invention, other polymers such as polyethylene, polypropylene, polyamide, polyester and polyurethane, inorganic fillers such as calcium carbonate, talc, sellaite, clay, titanium oxide, carbon black and barium sulfate, a pigment, a flame retardant, a lubricant, a photo-stabilizer, a weather resistance stabilizer, an antistatic agent, an ultraviolet absorber, an antioxidant, a mold-releasing agent, a foaming agent, aroma chemicals, oils, a softening agent, etc. can be added to an extent not to affect the effect of the invention.

Also the present invention relates to the process for preparing a thermoplastic polymer composition which comprises a step for dynamically crosslinking at least one kind of the fluororubber (b) in the presence of the fluororubber (A) comprising the fluorine-containing ethylenic polymer (a) under melting condition of the fluororesin (A) to obtain the crosslinked fluororubber (B), in which at least a part of the fluororubber (b) is crosslinked, and the process is characterized by comprising a step for adjusting a 90 % vulcanization completion time T90 of the fluororubber (b) at a dynamically crosslinking temperature (dynamic crosslinking temperature) to be 2 to 6 minutes.

It is preferable that the adjusting step further includes a step for adding the crosslinking agent (C) and the crosslinking accelerator (D) to the fluororubber (b).

Any of the fluororesin (A), the crosslinking agent (C) and the crosslinking accelerator (D) explained supra can be used preferably. In addition, the crosslinking conditions, mixing ratio, adding amounts, etc. mentioned supra can be used suitably.

Also the adjusting step is as explained supra.

The thermoplastic polymer composition of the present invention can be molded by using a general molding process and molding device. As for molding processes, optional processes, for example, injection molding, extrusion molding, compression molding, blow molding, calendar molding and vacuum molding can be adopted, and the thermoplastic polymer composition of the present invention is molded into a molded article in an optional shape according to an intended purpose.

Further, the present invention relates to the molded article obtained by using the thermoplastic polymer composition of the present invention, and the molded article encompasses a molded article in the form of sheet or film, and also a laminated article having a layer comprising the thermoplastic polymer composition of the present invention and a layer comprising other material.

In the laminated article having at least one layer comprising the thermoplastic polymer composition of the present invention and at least one layer comprising other material, appropriate material may be selected as the other material according to required properties and intended applications. Examples of the other material are, for instance, thermoplastic polymers such as polyolefin (for instance, high-density polyethylene, middle-density polyethylene, low-density polyethylene, linear low-density polyethylene, ethylene-propylene copolymer and polypropylene), nylon, polyester, vinyl chloride resin (PVC) and vinylidene chloride resin (PVDC), crosslinked rubbers such as ethylene-propylene-diene rubber, butyl rubber, nitrile rubber, silicone rubber and acrylic rubber, metals, glass, wood, ceramics, etc.

In a molded article having a laminated structure, a layer of an adhesive agent may be inserted between the layer comprising the thermoplastic polymer composition of the present invention and the substrate layer comprising other material. The layer comprising the thermoplastic polymer composition of the present invention and the substrate layer comprising other material can be adhered strongly and integrated by inserting a layer of an adhesive agent. Examples of the adhesive agent used in the layer of the adhesive agent are a diene polymer modified with acid anhydride; a polyolefin modified with acid anhydride; a mixture of a high molecular weight polyol (for example, polyester polyol obtained by polycondensation of a glycol compound such as ethylene glycol or propylene glycol with a dibasic acid such as adipic acid; a partly-saponified compound of a copolymer of vinyl acetate and vinyl chloride; or the like) and a polyisocyanate compound (for example, a reaction product of a glycol compound such as 1,6-hexamethylene glycol and a diisocyanate compound such as 2,4-tolylene diisocyanate in a molar ratio of 1 to 2; a reaction product of a triol compound such as trimethylolpropane and a diisocyanate compound such as 2,4-tolylenediisocyanate in a molar ratio of 1 to 3; or the like); and the like. Also, known processes such as co-extrusion, co-injection and extrusion coating can be used for forming a laminated structure.

The thermoplastic polymer composition of the present invention and the molded article obtained from the composition are suitably employed in the semiconductor-related field such as a semiconductor manufacturing device, a liquid crystal panel manufacturing device, a plasma panel manufacturing device, a plasma address liquid crystal panel, a field emission display panel and a substrate of a solar battery; in the field of automobiles; in the field of aircraft; in the field of rockets; in the field of ships and vessels; in the field of chemical products in a chemical plant; in the field of chemicals such as medical drugs; in the field of photography such as a developing equipment; in the field of printing such as printing machinery; in the field of coating such as coating facility; in the field of analytical-physical and chemical equipment; in the field of food plants; in the field of atomic power plant equipment; in the field of steel making such as an iron plate processing facility; in the field of general industries; in the field of electricity; in the field of fuel batteries; and the like. Among these fields, the thermoplastic polymer composition of the present invention and the molded article obtained from the composition can be used more suitably in the field of automobiles.

In the field of automobiles, a gasket, a shaft seal, a valve stem seal, a sealing material or a hose can be employed for an engine and its peripheral equipment, a hose and a sealing material can be used for an AT equipment, and an O (square) ring, a tube, a packing, a core material of a valve, a hose, a sealing material and a diaphragm can be employed for a fuel system and its peripheral equipment. Concretely, examples are an engine head gasket, a metal gasket, a sump gasket, a crank shaft seal, a cam shaft seal, a valve stem seal, a manifold packing, an oil hose, a seal for an oxygen sensor, an ATF hose, an injector O-ring, an injector packing, a fuel pump O-ring, a diaphragm, a fuel hose, a crank shaft seal, a gear box seal, a power piston packing, a seal for a cylinder liner, a seal for a valve stem, a front pump seal of an automatic gear, a rear axle pinion seal, a gasket of an universal joint, a pinion seal of a speedometer, a piston cup of a foot brake, an O-ring of torque transmission, an oil seal, a seal for an exhaust gas reheating equipment, a bearing seal, an EGR tube, a twin carburetor tube, a diaphragm for the sensor of a carburetor, a vibration-proof rubber (an engine mount, an exhaust out-let), a hose for a reheating equipment, and an oxygen sensor bush.

The molded article of the present invention can be suitably used in various applications descried above, and is particularly suitable for a hose for industrial use, a tube for industrial use, a fuel hose and a fuel tube.

EXAMPLES

Then, the present invention is explained by means of Examples, but is not limited thereto.

<Vulcanizability>

A vulcanization curve is obtained at 170°C and 260°C using JSR Curastometer model II, and a minimum viscosity (ML), a degree of vulcanization (MH), an induction time (T10) and an optimum vulcanization time (T90) are obtained by a change in a torque. When a change in a torque is not recognized even after a lapse of not less than 30 minutes in a heated state, a vulcanization reaction is judged not to have proceeded.

<Production of sheet-like test piece>

The thermoplastic polymer compositions prepared in Examples and Comparative Examples are set in a metal mold and kept at a temperature (280°C) higher by 60°C than the melting point (220°C) of the fluororesin (A) used for the composition for 15 to 30 minutes by using a heat press. After the composition subjected to dynamic vulcanization is formed into a molten state, a load of 3 MPa is applied for one minute and compression molding is carried out to produce a sheet-like test piece having a specific thickness.

<Measurement of tensile strength at break, tensile elongation at break and tensile modulus of elasticity>

The 2 mm thick sheet-like test pieces are produced according to the above described method, and then, the test pieces are cut into a shape of dumbbell with a distance of 3.18 mm between the bench marks by using a model ASTM V dumbbell. By employing the obtained dumbbell-shaped test pieces, a tensile strength at break, a tensile elongation at break and a tensile modulus of elasticity at break are measured at 25°C by using an Autograph (model AGS-J 5kN made by SHIMADZU CORPORATION) under the condition of 50 mm/min, according to ASTM D638.

<Fuel permeability>

The 0.5 mm thick sheet-like test pieces are produced according to the above described method. 18 mL of CE 10 (toluene/isooctane/ethanol=45/45/10 vol %) as an imitation fuel is poured into a 20 mL SUS vessel (open part area: $1.26 \times 10^{-3} m^2$), the sheet-like test piece is set on the open part of the vessel and the vessel is sealed to make a test article. The test article is put in a constant temperature equipment (60°C), and a weight of the test article is measured. When decrease of the weight per unit time becomes constant, a fuel permeation coefficient is obtained by the following equation.

$$\text{Fuel permeation coefficient } (g \cdot mm/m^2 \cdot day) = \frac{(\text{Decreased weight (g)}) \times (\text{Thickness of sheet (mm)})}{(\text{Open part area } 1.26 \times 10^{-3}(m^2)) \times (\text{Measuring interval (day)})}$$

<Flowability>

Melt-flow rate (MFR) is measured by a melt-flow measurement device (manufactured by Kabushiki Kaisha Toyo Seiki Seisakusho) under the conditions of 297°C and a load of 5,000 g by employing the pellets of the thermoplastic polymer composition prepared in Examples and Comparative Examples.

<Kneading method>

The fluororesin (A) and the fluororubber (B) are kneaded using a LABOPLASTOMIL (manufactured by Kabushiki Kaisha Toyo Seiki Seisakusho). A total amount of the fluororesin (A) and the fluororubber (B) is adjusted so that a total volume thereof becomes 77 vol % of the total volume of a kneading portion of LABOPLASTOMIL. The temperature of LABOPLASTOMIL is set at a temperature (260°C) higher by 40°C than the melting point (220°C) of the fluororesin (A) used for the composition. After the LABOPLASTOMIL temperature becomes stable, the fluororesin (A) is poured into the LABOPLASTOMIL and subjected to stirring at 10 rpm for 5 to 10 minutes to melt the fluororesin (A). To the fluororesin (A) in a molten state is added a fluororubber composition (b-1), (b-2), (b-3), (b-4) or (b-5), and immediately after the addition, the number of rotations is increased to 80 rpm. The stirring is continued for 10 minutes after the torque indicates a maximum value (corresponding to T90 of Curastometer model II) to obtain a dynamically vulcanized composition of fluororesin (A) / fluororubber (B).

In Examples and Comparative Examples, the following fluorine-containing ethylenic polymer (a), fluororubber (b), crosslinking agent (C) and crosslinking accelerator (D) are used.

<Fluororesin (A)>

Tetrafluoroethylene-ethylene copolymer (EP-610 available from DAIKIN INDUSTRIES, LTD., melting point: 218°C to 228°C, MFR at 297°C at a load of 5,000 g: 25 to 35 g/10 min).

<Fluororubber (b)>

Two-component rubber comprising vinylidene fluoride (VdF) and hexafluoropropylene (HFP) (VdF:HFP=78: 22 mol%, Mooney viscosity at 121°C: 41, MFR at 297°C at a load of 5,000 g: 28 g/10 min).

<Fluororubber (b2)>

Three-component rubber comprising vinylidene fluoride (VdF), tetrafluoroethylene (TFE) and hexafluoropropylene (HFP) (VdF:TFE:HFP=50:20:30 mol%, Mooney viscosity at 100°C: 88).

<Crosslinking agent (C)>

Polyol crosslinking agent: 2,2-bis(4-hydroxyphenyl)perfluoropropane ("Bisphenol AF" available from DAIKIN INDUSTRIES, LTD.).

<Crosslinking accelerator (D)>

Benzyltriphenylphosphonium chloride: (BTPPC available from Hokko Chemical Industrial Co., Ltd.)

REFERENCE EXAMPLE 1

(Preparation of fluororubber compositions (b-1) to (b-3))

To 100 parts by weight of the fluororubber (b) were added 2.17 parts by weight (X) of the crosslinking agent (C), 0.11 part by weight (Y) of the crosslinking accelerator (D) and 3 parts by weight of magnesium oxide (Kyowamag 150 of Kyowa Chemical Industry Co., Ltd.), followed by kneading with a 8-inch open roll to obtain a fluororubber composition (b-1).

To 100 parts by weight of the fluororubber (b) were added 8.68 parts by weight (X) of the crosslinking agent (C), 0.44 part by weight (Y) of the crosslinking accelerator (D) and 3 parts by weight of magnesium oxide (Kyowamag 150 of Kyowa Chemical Industry Co., Ltd.), followed by kneading with a 8-inch open roll to obtain a fluororubber composition (b-2).

To 100 parts by weight of the fluororubber (b) were added 2.17 parts by weight (X) of the crosslinking agent (C), 0.43 part by weight (Y) of the crosslinking accelerator (D), 3 parts by weight of magnesium oxide (Kyowamag 150 of Kyowa Chemical Industry Co., Ltd.) and 6 parts by weight of calcium hydroxide (CALDIC 2000 produced by Ohmi Chemical Industry Co., Ltd.), followed by kneading with a 8-inch open roll to obtain a fluororubber composition (b-3).

Components for the fluororubber compositions (b-1) to (b-3) were mixed in amounts shown in Table 1 and kneaded. Vulcanization characteristics of those fluororubber compositions measured at 170°C and 260°C with a Curastometer model II are shown in Table 1. A vulcanization reaction of the fluororubber compositions (b-1) and (b-2) did not proceed at 170°C, and the vulcanization time T90 at 260°C was adjusted to be 4 minutes. In the fluororubber composition (b-3), since a vulcanization reaction was adjusted so as to terminate in a general vulcanization speed of 4 minutes at 170°C, the vulcanization time T90 at 260°C was 0.4 minute.

TABLE 1

|  | Fluororubber composition (b-1) | | Fluororubber composition (b-2) | | Fluororubber composition (b-3) | |
|---|---|---|---|---|---|---|
| Components (part by weight) | | | | | | |
| Fluororubber (b) | 100 | | 100 | | 100 | |
| Bisphenol AF | 2.17 | | 8.68 | | 2.17 | |
| BTPPC | 0.11 | | 0.44 | | 0.43 | |
| Magnesium oxide | 3 | | 3 | | 3 | |
| Calcium hydroxide | 0 | | 0 | | 0 | |
| Vulcanization characteristics | | | | | | |
| Curastometer model II | | | | | | |
| Temperature (°C) | 170 | 260 | 170 | 260 | 170 | 260 |
| ML (N) | - | 0.3 | - | 0.1 | 1.2 | 1.7 |
| MH (N) | - | 7.8 | - | 6.7 | 28.5 | 29.1 |
| T10 (min) | - | 1.7 | - | 2.1 | 2.9 | 0.2 |
| T90 (min) | - | 4.0 | - | 4.0 | 3.8 | 0.4 |

REFERENCE EXAMPLE 2

(Preparation of fluororubber compositions (b-4) and (b-5))

To 100 parts by weight of the fluororubber (b2) were added 2.00 parts by weight (X) of the crosslinking agent (C), 1.00 part by weight (Y) of the crosslinking accelerator (D) and 3 parts by weight of magnesium oxide (Kyowamag 150 of Kyowa Chemical Industry Co., Ltd.), followed by kneading with a 8-inch open roll to obtain a fluororubber composition (b-4).

To 100 parts by weight of the fluororubber (b2) were added 2.00 parts by weight (X) of the crosslinking agent (C), 2.00 parts by weight (Y) of the crosslinking accelerator (D), 3 parts by weight of magnesium oxide (Kyowamag 150 of Kyowa Chemical Industry Co., Ltd.) and 6 parts by weight of calcium hydroxide (CALDIC 2000 produced by Ohmi Chemical Industry Co., Ltd.), followed by kneading with a 8-inch open roll to obtain a fluororubber composition (b-5).

Components for the fluororubber compositions (b-4) and (b-5) were mixed in amounts shown in Table 2 and kneaded. Vulcanization characteristics of those fluororubber compositions measured at 170°C and 260°C with a Curastometer model II are shown in Table 1. A vulcanization reaction of the fluororubber composition (b-4) did not proceed at 170°C, and the vulcanization time T90 at 260°C was adjusted to be 3.6 minutes. In the fluororubber composition (b-5), since a vulcanization reaction was adjusted so as to terminate in a general vulcanization speed of 4 minutes at 170°C, the vulcanization time T90 at 260°C was 0.5 minute.

TABLE 2

|  | Fluororubber composition (b-4) | Fluororubber composition (b-5) |
|---|---|---|
| Components (part by weight) | | |
| Fluororubber (b) | 100 | 100 |
| Bisphenol AF | 2.00 | 2.00 |
| BTPPC | 1.00 | 2.00 |
| Magnesium oxide | 3 | 3 |
| Calcium hydroxide | 0 | 6 |

(continued)

| Vulcanization characteristics | | | | |
|---|---|---|---|---|
| Curastometer model II | | | | |
| Temperature (°C) | 170 | 260 | 170 | 260 |
| ML (N) | - | 0.1 | 1.2 | 1.1 |
| MH (N) | - | 4.9 | 22.3 | 24.5 |
| T10 (min) | - | 1.6 | 2.5 | 0.4 |
| T90 (min) | - | 3.6 | 4.0 | 0.5 |

<Measurement of tensile strength at break>

EXAMPLE 1

The fluororesin (A) and the fluororubber composition (b-1) were kneaded in ratios of 80/20, 70/30, 60/40 and 50/50 (weight ratio) by a specific method to obtain dynamically crosslinked compositions. Sheet-like test pieces were produced from the dynamically crosslinked compositions, and tensile strength at break thereof was measured. The results of the measurement are shown in Table 3.

EXAMPLE 2

Sheet-like test pieces of dynamically crosslinked compositions were produced by the same method as in Example 1 except that the fluororubber composition (b-2) was used instead of the fluororubber composition (b-1), and measurement was carried out. The results of the measurement are shown in Table 3.

EXAMPLE 3

Sheet-like test pieces of dynamically crosslinked compositions were produced by the same method as in Example 1 except that the fluororubber composition (b-4) was used instead of the fluororubber composition (b-1), and measurement was carried out. The results of the measurement are shown in Table 3.

COMPARATIVE EXAMPLE 1

Sheet-like test pieces of dynamically crosslinked compositions were produced by the same method as in Example 1 except that the fluororubber composition (b-3) was used instead of the fluororubber composition (b-1), and measurement was carried out. The results of the measurement are shown in Table 3.

COMPARATIVE EXAMPLE 2

Sheet-like test pieces of dynamically crosslinked compositions were produced by the same method as in Example 1 except that the fluororubber composition (b-5) was used instead of the fluororubber composition (b-1), and measurement was carried out. The results of the measurement are shown in Table 3.

TABLE 3

| | Ex. 1 | Ex. 2 | Ex. 3 | Com. Ex. 1 | Com. Ex. 2 |
|---|---|---|---|---|---|
| Fluororesin/fluororubber (weight ratio) | | | | | |
| 80/20 | 27 | 32 | 28 | 14 | 15 |
| 70/30 | 22 | 28 | 22 | 13 | 14 |
| 60/40 | 20 | 26 | 17 | 12 | 11 |

(continued)

| | Ex. 1 | Ex. 2 | Ex. 3 | Com. Ex. 1 | Com. Ex. 2 |
|---|---|---|---|---|---|
| Fluororesin/fluororubber (weight ratio) | | | | | |
| 50/50 | 19 | 23 | 13 | 10 | 10 |
| (unit: MPa) | | | | | |

With respect to the dynamically crosslinked compositions (Examples 1, 2 and 3) prepared using the fluororubber composition (b-1), the fluororubber composition (b-2) and the fluororubber composition (b-4), tensile strength at break was enhanced remarkably as compared with the dynamically crosslinked compositions (Comparative Examples 1 and 2) prepared using the fluororubber composition (b-3) and the fluororubber composition (b-5). This suggests that the fluororubber could be finely dispersed in the fluororesin more effectively by adjusting the vulcanization speed. Also it was found that tensile strength at break could be enhanced more by increasing the amounts of the crosslinking agent and crosslinking accelerator with the ratio thereof being fixed.

<Measurement of tensile elongation at break>

EXAMPLE 4

The fluororesin (A) and the fluororubber composition (b-1) were kneaded in ratios of 80/20, 70/30, 60/40 and 50/50 (weight ratio) by a specific method to obtain dynamically crosslinked compositions. Sheet-like test pieces were produced from the dynamically crosslinked compositions, and tensile elongation at break thereof was measured. The results of the measurement are shown in Table 4.

EXAMPLE 5

Sheet-like test pieces of dynamically crosslinked compositions were produced by the same method as in Example 4 except that the fluororubber composition (b-2) was used instead of the fluororubber composition (b-1), and measurement was carried out. The results of the measurement are shown in Table 4.

EXAMPLE 6

Sheet-like test pieces of dynamically crosslinked compositions were produced by the same method as in Example 4 except that the fluororubber composition (b-4) was used instead of the fluororubber composition (b-1), and measurement was carried out. The results of the measurement are shown in Table 4.

COMPARATIVE EXAMPLE 3

Sheet-like test pieces of dynamically crosslinked compositions were produced by the same method as in Example 4 except that the fluororubber composition (b-3) was used instead of the fluororubber composition (b-1), and measurement was carried out. The results of the measurement are shown in Table 4.

COMPARATIVE EXAMPLE 4

Sheet-like test pieces of dynamically crosslinked compositions were produced by the same method as in Example 4 except that the fluororubber composition (b-5) was used instead of the fluororubber composition (b-1), and measurement was carried out. The results of the measurement are shown in Table 4.

TABLE 4

| | Ex. 4 | Ex. 5 | Ex. 6 | Com. Ex. 3 | Com. Ex. 4 |
|---|---|---|---|---|---|
| Fluororesin/fluororubber (weight ratio) | | | | | |
| 80/20 | 450 | 400 | 430 | 300 | 320 |
| 70/30 | 470 | 360 | 420 | 290 | 300 |
| 60/40 | 420 | 350 | 410 | 280 | 290 |

(continued)

| | Ex. 4 | Ex. 5 | Ex. 6 | Com. Ex. 3 | Com. Ex. 4 |
|---|---|---|---|---|---|
| Fluororesin/fluororubber (weight ratio) | | | | | |
| 50/50 | 430 | 330 | 410 | 240 | 260 |
| (unit: %) | | | | | |

With respect to the dynamically crosslinked compositions (Examples 4, 5 and 6) prepared using the fluororubber composition (b-1), the fluororubber composition (b-2) and the fluororubber composition (b-4), tensile elongation at break was larger as compared with the dynamically crosslinked compositions (Comparative Examples 3 and 4) prepared using the fluororubber composition (b-3) and the fluororubber composition (b-5). This suggests that the fluororubber could be finely dispersed in the fluororesin more effectively by adjusting the vulcanization speed.

<MFR>

EXAMPLE 7

The fluororesin (A) and the fluororubber composition (b-2) were kneaded in ratios of 80/20, 70/30 and 60/40 (weight ratio) by a specific method to obtain dynamically crosslinked compositions. MFR of the obtained dynamically crosslinked compositions was measured. The results of the measurement are shown in Table 5.

EXAMPLE 8

The dynamically crosslinked compositions were produced by the same method as in Example 7 except that the fluororubber composition (b-1) was used instead of the fluororubber composition (b-2), and measurement was carried out. The results of the measurement are shown in Table 5.

EXAMPLE 9

The dynamically crosslinked compositions were produced by the same method as in Example 7 except that the fluororubber composition (b-4) was used instead of the fluororubber composition (b-2), and measurement was carried out. The results of the measurement are shown in Table 5.

COMPARATIVE EXAMPLE 5

The dynamically crosslinked compositions were produced by the same method as in Example 7 except that the fluororubber composition (b-3) was used instead of the fluororubber composition (b-2), and measurement was carried out. The results of the measurement are shown in Table 5.

COMPARATIVE EXAMPLE 6

The dynamically crosslinked compositions were produced by the same method as in Example 7 except that the fluororubber composition (b-5) was used instead of the fluororubber composition (b-2), and measurement was carried out. The results of the measurement are shown in Table 5.

TABLE 5

| | Ex. 7 | Ex. 8 | Ex. 9 | Com. Ex. 5 | Com. Ex. 6 |
|---|---|---|---|---|---|
| Fluororesin/fluororubber (weight ratio) | | | | | |
| 80/20 | 13.4 | 12.4 | 15.0 | 11.9 | 12.0 |
| 70/30 | 7.5 | 1.6 | 9.0 | 1.4 | 7.0 |
| 60/40 | 2.8 | 0.8 | 5.6 | 0.6 | 3.5 |
| (unit: g/10 min) | | | | | |

With respect to the dynamically crosslinked compositions (Examples 7, 8 and 9) prepared using the fluororubber composition (b-2), (b-1) and (b-4) subjected to adjusting of the vulcanization speed, it was found that MFR can be enhanced as compared with the dynamically crosslinked compositions (Comparative Examples 5 and 6) prepared using the fluororubber composition (b-3) and (b-5). Also it was found that MFR could be enhanced significantly by increasing the amounts of the crosslinking agent and crosslinking accelerator (Example 7) with the ratio thereof being fixed.

<Measurement of tensile modulus of elasticity>

EXAMPLE 10

The fluororesin (A) and the fluororubber composition (b-1), the fluororesin (A) and the fluororubber composition (b-2), the fluororesin (A) and the fluororubber composition (b-3), the fluororesin (A) and the fluororubber composition (b-4), and the fluororesin (A) and the fluororubber composition (b-5) were kneaded, respectively by a specific method so that the weight ratio of fluororesin/fluororubber became 50/50 to obtain dynamically crosslinked compositions. Sheet-like test pieces were produced from the dynamically crosslinked compositions, and tensile modulus of elasticity at break thereof was measured. The results of the measurement are shown in Table 6.

EXAMPLE 11

Sheet-like test pieces of dynamically crosslinked compositions were produced by the same method as in Example 10 except that the weight ratio of fluororesin/fluororubber was changed to 60/40, and measurement was carried out. The results of the measurement are shown in Table 6.

EXAMPLE 12

Sheet-like test pieces of dynamically crosslinked compositions were produced by the same method as in Example 10 except that the weight ratio of fluororesin/fluororubber was changed to 70/30, and measurement was carried out. The results of the measurement are shown in Table 6.

EXAMPLE 13

Sheet-like test pieces of dynamically crosslinked compositions were produced by the same method as in Example 10 except that the weight ratio of fluororesin/fluororubber was changed to 83/17, and measurement was carried out. The results of the measurement are shown in Table 6.

COMPARATIVE EXAMPLE 7

Sheet-like test pieces of dynamically crosslinked compositions were produced by the same method as in Example 10 except that the weight ratio of fluororesin/fluororubber was changed to 87/13, and measurement was carried out. The results of the measurement are shown in Table 6.

TABLE 6

| | Ex. 10 | Ex. 11 | Ex. 12 | Ex. 13 | Com. Ex. 7 |
|---|---|---|---|---|---|
| Kind of fluororubber composition (weight ratio) | | | | | |
| b-1 | 125 | 210 | 270 | 365 | 405 |
| b-2 | 133 | 201 | 278 | 370 | 410 |
| b-3 | 117 | 200 | 270 | 360 | 405 |
| b-4 | 103 | 173 | 265 | 365 | 410 |
| b-5 | 104 | 175 | 272 | 368 | 408 |
| (unit: MPa) | | | | | |

It was found that the tensile modulus of elasticity of the obtained dynamically crosslinked composition is determined by the ratio of fluororesin/fluororubber irrespective of the vulcanization speed and vulcanization density of the fluororubber. It was found that in order to obtain a tensile modulus of elasticity of not more than 400 MPa, the proportion of the fluororesin is required to be not more than 85 % in a weight ratio (fluororubber: not less than 15 %).

<Measurement of fuel permeation coefficient>

EXAMPLE 14

The fluororesin (A) and the fluororubber composition (b-1), the fluororesin (A) and the fluororubber composition (b-2), the fluororesin (A) and the fluororubber composition (b-3), the fluororesin (A) and the fluororubber composition (b-4), and the fluororesin (A) and the fluororubber composition (b-5) were kneaded, respectively by a specific method so that the weight ratio of fluororesin/fluororubber became 80/20 to obtain dynamically crosslinked compositions. The obtained dynamically crosslinked compositions were molded into 0.5 mm thick films. Fuel permeability of these films was measured. The results of the measurement are shown in Tables 7 and 8.

EXAMPLE 15

Film-like test pieces of dynamically crosslinked compositions were produced by the same method as in Example 14 except that the weight ratio of fluororesin/fluororubber was changed to 70/30, and measurement was carried out. The results of the measurement are shown in Tables 7 and 8.

EXAMPLE 16

Film-like test pieces of dynamically crosslinked compositions were produced by the same method as in Example 14 except that the weight ratio of fluororesin/fluororubber was changed to 60/40, and measurement was carried out. The results of the measurement are shown in Tables 7 and 8.

COMPARATIVE EXAMPLE 8

Film-like test pieces of dynamically crosslinked compositions were produced by the same method as in Example 14 except that the weight ratio of fluororesin/fluororubber was changed to 50/50, and measurement was carried out. The results of the measurement are shown in Table 7.

EXAMPLE 17

Film-like test pieces of dynamically crosslinked compositions were produced by the same method as in Example 14 except that the weight ratio of fluororesin/fluororubber was changed to 42/58, and measurement was carried out. The results of the measurement are shown in Tables 7 and 8.

COMPARATIVE EXAMPLE 9

Film-like test pieces of dynamically crosslinked compositions were produced by the same method as in Example 14 except that the weight ratio of fluororesin/fluororubber was changed to 38/62, and measurement was carried out. The results of the measurement are shown in Table 7.

TABLE 7

|  | Ex. 14 | Ex. 15 | Ex. 16 | Com. Ex. 8 |
|---|---|---|---|---|
| Kind of fluororubber composition (weight ratio) |  |  |  |  |
| b-1 | 6.5 | 15.0 | 39.0 | 120 |
| b-2 | 7.0 | 14.1 | 39.5 | 130 |
| b-3 | 8.0 | 13.5 | 38.5 | 125 |
| (unit: g·mm/m$^2$· day) |  |  |  |  |

TABLE 8

| | Ex. 14 | Ex. 15 | Ex. 16 | Com. Ex. 8 | Ex. 17 | Com. Ex. 9 |
|---|---|---|---|---|---|---|
| Kind of fluororubber composition (weight ratio) | | | | | | |
| b-4 | 6.0 | 8.0 | 13.0 | 23.5 | 38.5 | 41.0 |
| b-5 | 6.0 | 7.5 | 12.5 | 23.5 | 38.0 | 41.5 |
| (unit: g· mm/m$^2$· day) | | | | | | |

It was found that the fuel permeation coefficient of the dynamically crosslinked composition is determined by the ratio of fluororesin/fluororubber irrespective of the vulcanization speed and vulcanization density of the fluororubber. It was found that in order to obtain a fuel permeation coefficient of not more than 40 g · mm/m$^2$ day, the proportion of the fluororesin is required to be not less than 40 % in a weight ratio (fluororubber: not more than 60 %).

It was found from morphology observation with a scanning electron microscope (made by JEOL Ltd.) that the thermoplastic polymer compositions obtained from the fluororubber compositions (b-1, b-2 and b-4) subjected to adjusting of the vulcanization speed have a structure in which the fluororubber (A) forms a continuous phase and the crosslinked fluororubber (B) forms a dispersion phase. An average particle size of the dispersed rubbers of the respective crosslinked fluororubbers (B) was 0.01 to 30 μm.

It was found from morphology observation with a scanning electron microscope (made by JEOL Ltd.) that the thermoplastic polymer compositions obtained from the fluororubber compositions (b-3 and b-5) which are not subjected to adjusting of the vulcanization speed have a structure in which the fluororubber (A) forms a continuous phase and the crosslinked fluororubber (B) forms a dispersion phase or a co-continuous phase.

INDUSTRIAL APPLICABILITY

The molded article obtained from the thermoplastic polymer composition of the present invention has a fuel permeation coefficient of not more than 40 g·mm/m$^2$·day and a tensile modulus of elasticity of not more than 400 MPa, and therefore, has excellent fuel permeation resistance, flexibility and moldability.

**Claims**

1.  A thermoplastic polymer composition which comprises a fluororesin (A) comprising a fluorine-containing ethylenic polymer (a) and a crosslinked fluororubber (B) in which at least a part of at least one kind of fluororubber (b) is crosslinked, wherein a weight ratio of the fluororesin (A) to the crosslinked fluororubber (B) is 85/15 to 40/60, a fuel permeation coefficient of a molded article obtained from the composition is not more than 40 g·mm/m$^2$· day and a tensile modulus of elasticity of the molded article is not more than 400 MPa.

2.  The thermoplastic polymer composition of Claim 1, wherein the crosslinked fluororubber (B) is obtained by dynamically crosslinking the fluororubber (b) in the presence of the fluororubber (A), under melting condition of the fluororesin (A).

3.  The thermoplastic polymer composition of Claim 2, wherein a 90 % vulcanization completion time T90 of the fluororubber (b) at a dynamically crosslinking temperature is adjusted to be 2 to 6 minutes.

4.  The thermoplastic polymer composition of any of Claims 1 to 3, wherein the fluororubber (b) is at least one kind of rubber selected from the group consisting of a vinylidene fluoride/hexafluoropropylene fluororubber, a vinylidene fluoride/tetrafluoroethylene/hexafluoropropylene fluororubber and a tetrafluoroethylene/propylene fluororubber.

5.  The thermoplastic polymer composition of any of Claims 1 to 4, wherein the fluorine-containing ethylenic polymer (a) is:

    (a-1) a copolymer of tetrafluoroethylene and ethylene, and/or
    (a-2) a copolymer of tetrafluoroethylene and a perfluoro ethylenically unsaturated compound represented by the formula (1):

$$CF_2=CF-R_f{}^1 \qquad (1)$$

wherein $R_f^1$ represents $-CF_3$ or $-OR_f^2$ and $R_f^2$ represents a perfluoroalkyl group having 1 to 5 carbon atoms.

6. The thermoplastic polymer composition of any of Claims 1 to 5, which comprises a polyhydroxy compound as a crosslinking agent (C).

7. The thermoplastic polymer composition of any of Claims 1 to 6 which has a structure having a continuous phase formed by the fluororesin (A) and a dispersion phase formed by the crosslinked fluororubber (B).

8. The thermoplastic polymer composition of Claim 7, wherein the crosslinked fluororubber (B) has an average particle size of dispersed rubbers of 0.01 to 30 $\mu$m.

9. A process for preparing a thermoplastic polymer composition which comprises a step for dynamically crosslinking at least one kind of the fluororubber (b) under melting condition of the fluororesin (A) comprising the fluorine-containing ethylenic polymer (a) to obtain the crosslinked fluororubber (B), in which at least a part of the fluororubber (b) is crosslinked; said process comprises an adjusting step for adjusting a 90 % vulcanization completion time T90 of the fluororubber (b) at a dynamically crosslinking temperature to be 2 to 6 minutes.

10. The process for preparing a thermoplastic polymer composition of Claim 9, wherein the adjusting step includes a step for further adding the crosslinking agent (C) and a crosslinking accelerator (D) to the fluororubber (b), and the amounts of crosslinking agent (C) and crosslinking accelerator (D) to be added to the fluororubber (b) are adjusted as follows.
(Adjusting method)
Assuming that the amounts of crosslinking agent (C) and crosslinking accelerator (D) when a 90 % vulcanization completion time T90 at 170°C is 2 to 6 minutes are X part by weight and Y part by weight, respectively,

    (i) the amount of crosslinking agent (C) is adjusted to be X part by weight and the amount of crosslinking accelerator (D) is adjusted to be 0.2Y to 0.5Y part by weight, or
    (ii) the amount of crosslinking agent (C) is adjusted to be 2X to 5X part by weight and the amount of crosslinking accelerator (D) is adjusted to be 0.4Y to 2.5Y part by weight.

11. A thermoplastic polymer composition obtained by the process for preparing a thermoplastic polymer composition of Claim 9 or 10.

12. A molded article comprising the thermoplastic polymer composition of any of Claims 1 to 8 and 11.

13. A laminated article having a layer comprising the thermoplastic polymer composition of any of Claims 1 to 8 and 11.

14. A laminated article having a layer comprising the thermoplastic polymer composition of any of Claims 1 to 8 and 11 and a layer comprising other thermoplastic polymer.

15. A laminated article having a layer comprising the thermoplastic polymer composition of any of Claims 1 to 8 and 11 and a layer comprising a crosslinked rubber.

16. A tube for industrial use comprising the laminated article of any of Claims 13 to 15.

17. A hose for industrial use comprising the laminated article of any of Claims 13 to 15.

18. A fuel tube comprising the laminated article of any of Claims 13 to 15.

19. A fuel hose comprising the laminated article of any of Claims 13 to 15.

## INTERNATIONAL SEARCH REPORT

| International application No. |
| --- |
| PCT/JP2005/021668 |

A. CLASSIFICATION OF SUBJECT MATTER
*C08L27/12*(2006.01)

According to International Patent Classification (IPC) or to both national classification and IPC

B. FIELDS SEARCHED

Minimum documentation searched (classification system followed by classification symbols)
C08L27/00-24

Documentation searched other than minimum documentation to the extent that such documents are included in the fields searched

Jitsuyo Shinan Koho        1922-1996    Jitsuyo Shinan Toroku Koho    1996-2006
Kokai Jitsuyo Shinan Koho   1971-2006    Toroku Jitsuyo Shinan Koho    1994-2006

Electronic data base consulted during the international search (name of data base and, where practicable, search terms used)
WPI

C. DOCUMENTS CONSIDERED TO BE RELEVANT

| Category* | Citation of document, with indication, where appropriate, of the relevant passages | Relevant to claim No. |
| --- | --- | --- |
| X | JP 10-101880 A (Nichias Corp.),<br>21 April, 1998 (21.04.98),<br>Claims; Par. Nos. [0024], [0031], [0037];<br>examples<br>(Family: none) | 1-19 |
| X<br><br>Y | JP 6-228397 A (Asahi Glass Co., Ltd.),<br>16 August, 1994 (16.08.94),<br>Claims; Par. Nos. [0012], [0020], [0024];<br>examples<br>(Family: none) | 1,2,4-8,<br>12-15<br>3,9-11,16-19 |
| X<br><br>Y | JP 5-140401 A (Asahi Glass Co., Ltd.),<br>08 June, 1993 (08.06.93),<br>Claims; Par. Nos. [0013], [0028], [0030];<br>examples<br>& US 5354811 A        & EP 543342 B1 | 1,2,4-8,<br>12-15<br>3,9-11,16-19 |

☒ Further documents are listed in the continuation of Box C.   ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>10 February, 2006 (10.02.06) | Date of mailing of the international search report<br>21 February, 2006 (21.02.06) |
| --- | --- |
| Name and mailing address of the ISA/<br>Japanese Patent Office | Authorized officer |
| Facsimile No. | Telephone No. |

Form PCT/ISA/210 (second sheet) (April 2005)

**EP 1 826 238 A1**

**INTERNATIONAL SEARCH REPORT**

| International application No. |
| --- |
| PCT/JP2005/021668 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X | JP 4-108845 A  (E.I. Du Pont De Nemours & Co.), 09 April, 1992 (09.04.92), | 1,2,4-8, 12-15 |
| Y | Claims; Par. Nos. [0010], [0012], [0016], [0017]; examples & US 5006594 A            & EP 439734 B1 | 3,9-11,16-19 |
| X | JP 61-57641 A  (E.I. Du Pont De Nemours & Co.), 24 March, 1986 (24.03.86), | 1,2,4-8, 12-15 |
| Y | Claims; page 3, upper left column, line 4 to page 4, upper right column, line 12; examples & EP 168020 B | 3,9-11,16-19 |
| Y | JP 2002-516197 A  (Dayco Products L.L.C.), | 13-19 |
| A | 04 June, 2002 (04.06.02), Claims; Par. Nos. [0026] to [0028] & US 6203873 B1            & EP 1124677 A1 & WO 99/61227 A1 | 1-12 |
| A | WO 2001/034666 A  (Daikin Industries, Ltd.), 17 May, 2001 (17.05.01), Full text & US 6870018 B1            & EP 1243601 A1 | 1-19 |

Form PCT/ISA/210 (continuation of second sheet) (April 2005)

## INTERNATIONAL SEARCH REPORT

International application No.

PCT/JP2005/021668

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
    because they relate to subject matter not required to be searched by this Authority, namely:

2. ☐ Claims Nos.:
    because they relate to parts of the international application that do not comply with the prescribed requirements to such an extent that no meaningful international search can be carried out, specifically:

3. ☐ Claims Nos.:
    because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
    The invention of claim 1 aims at improving a composition comprising a fluororesin and a crosslinked fluororubber in the fuel transmission coefficient and the tensile modulus by specifying the fluororesin/crosslinked fluororubber weight ratio, while the invention of claim 9 aims at improving a composition described above in the dispersibility of the fluororubber in the fluororesin by specifying the crosslinking conditions for the composition.

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.    Consequently, this international search report is restricted to the invention first mentioned in the claims; it is covered by claims Nos.:

**Remark on Protest**    ☐ The additional search fees were accompanied by the applicant's protest and, where applicable,
the                                          payment of a protest fee..

                        ☐ The additional search fees were accompanied by the applicant's protest but the applicable protest
                            fee was not paid within the time limit specified in the invitation.

                        ☐ No protest accompanied the payment of additional search fees.

Form PCT/ISA/210 (continuation of first sheet (2)) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 61057641 A

- JP 11147891 A